# FASCICULE DE BREVET EUROPEEN

(11) **EP 2 831 208 B1**
(45) Date de publication et mention de la délivrance du brevet: **01.11.2017**
(21) Numéro de dépôt: 13715293.0
(22) Date de dépôt: 11.03.2013
(51) Int. Cl.: C10G 67/06, C10G 25/00, B01D 15/20, C10G 53/08, C10L 3/12, B01D 15/18, C10G 53/16

(54) **PROCÉDÉ DE PURIFICATION D'UNE CHARGE D'HYDROCARBURES**
VERFAHREN ZUR REINIGUNG EINES KOHLENWASSERSTOFFROHSTOFFS
PROCESS FOR PURIFYING A HYDROCARBON FEEDSTOCK

(30) Priorité: 26.03.2012 FR 1200887
(43) Date de publication de la demande: 04.02.2015
(73) Titulaire: Axens, 92508 Rueil Malmaison (FR)
(72) Inventeur: VILLECHANGE, Isabelle, F-78800 Houilles (FR); FRISING, Tom, F-92000 Nanterre (FR)
(74) Mandataire: Ruis, Alain
(86) Numéro de dépôt international: PCT/FR2013/050502
(87) Numéro de publication internationale: WO 2013/144476

(56) Documents cités:
- FR-A1- 2 857 973
- FR-A1- 2 857 974
- FR-A1- 2 889 539
- US-A- 2 797 190

## Description

La présente invention concerne un procédé de purification d'une charge d'hydrocarbures liquide, par exemple d'une charge provenant d'unités de distillation de pétrole brut, au moyen d'une unité d'adsorption comprenant au moins un adsorbant régénérable. Le procédé selon l'invention trouve particulièrement son application dans le traitement de coupes pétrolières légères.

La demande de brevet FR 2 889 539 A1 décrit un procédé de désulfuration des essences comprenant une étape de fractionnement de ladite essence en une fraction légère comprenant les composés thiophéniques tels que le thiophène ou les méthylthiophènes, et une fraction lourde concentrant les composés soufrés aromatiques les plus lourds. La fraction lourde est traitée par hydrodésulfuration, tandis que la fraction légère est mise au contact d'un adsorbant solide permettant d'éliminer au moins en partie lesdits composés thiophéniques légers, le dit solide adsorbant étant régénéré par un flux interne au procédé.

### Art antérieur

Le pétrole brut qui est extrait des formations géologiques est un mélange complexe de différents composés hydrocarbonés, qui en tant que tel n'a pas d'intérêt marchand. Pour être exploitable, le pétrole brut doit subir plusieurs étapes de traitement afin de séparer différentes fractions qui présentent un intérêt industriel et commercial couvrant les domaines aussi diversifiés que l'énergie, le transport et la chimie.

Ces traitements sont réalisés dans des unités de raffinage plus ou moins complexes qui comprennent au moins une installation de distillation du pétrole brut. Cette étape de distillation est généralement conduite dans une colonne et consiste en une séparation des composés hydrocarbonés en fonction de leur température d'ébullition. Etant donné que le pétrole brut est constitué d'un grand nombre de composés, on ne cherche pas ici à obtenir des composés purs mais plutôt des "coupes" qui regroupent des composés ayant des caractéristiques physico-chimiques proches. Après fractionnement, ces coupes de distillation renferment encore des impuretés non désirables telles que l'eau, des composés soufrés, azotés ou encore oxygénés, qu'il est nécessaire d'éliminer lors d'opérations subséquentes de purification.

Une méthode pour effectuer la purification met en oeuvre un procédé d'adsorption, qui consiste à faire passer la charge à traiter dans une colonne d'adsorption contenant un solide adsorbant présentant une forte affinité avec les impuretés à éliminer. Une fois que le solide adsorbant est saturé en impuretés, il faut le régénérer par désorption au moyen d'un fluide dit "régénérant". Un procédé utilisé dans la purification de charge liquide est le procédé TSA ("Thermal Swing Adsorption" ou "procédé de régénération par modulation de la température") dans lequel la phase d'adsorption est menée à une température comprise typiquement entre -50 et 100°C et la phase de désorption est réalisée à haute température, typiquement entre 100 et 350°C, au moyen d'un fluide préalablement chauffé.

La mise en oeuvre du procédé TSA nécessite donc de disposer sur le site même de traitement d'une source de fluide régénérant ce qui engendre des coûts liés à l'approvisionnement et au stockage de ce fluide.

### Résumé de l'invention

Un but de l'invention est donc de proposer un procédé de purification d'hydrocarbures par adsorption dans lequel on peut s'affranchir de disposer d'un fluide de régénération externe à l'unité de traitement et qui soit plus économique grâce à une intégration thermique améliorée.

A cette fin, il est proposé un procédé de purification d'une charge d'hydrocarbures selon la revendication 1.

Le procédé selon l'invention utilise donc un flux interne au procédé comme fluide de régénération, qui est généré in-situ, de sorte qu'il n'est plus nécessaire de disposer d'une source d'un fluide régénérant externe au procédé.

Dans le cadre de l'invention, on entend désigner par le terme "flux interne" un flux généré par l'une des unités faisant partie intégrante du procédé.

En raison de la présence de certaines impuretés, le fluide interne ne peut généralement pas être exploité directement comme régénérant. Selon la présente invention, le fluide interne est traité pour le rendre chimiquement "inerte" vis-à-vis du solide adsorbant. Dans le cadre de l'invention, le traitement a pour but d'empêcher la désactivation du solide adsorbant lorsque ledit fluide interne est mis en contact avec celui-ci pendant la phase de régénération. A titre d'exemple on peut citer comme impuretés, les oléfines qui ont tendance à former des précurseurs de coke à la surface du solide lorsqu'elles sont soumises à des températures élevées.

Grâce au procédé selon l'invention, on améliore l'intégration thermique du fait de l'incorporation de l'étape de traitement du fluide de régénération au sein du procédé de traitement par adsorption. L'énergie calorifique mise en oeuvre en amont ou en aval de l'étape de traitement est avantageusement récupérée pour amener ensuite le fluide de régénération à sa température opérationnelle en régénération. En effet, dans le cas où le traitement du fluide de régénération est réalisé dans une unité de traitement totalement indépendante de l'unité de purification, il est nécessaire de refroidir le fluide traité en vue de son stockage avant son utilisation. Ce refroidissement n'est pas avantageux en terme d'intégration thermique car le fluide traité doit être de nouveau porté à des températures élevées pour pouvoir être mis en oeuvre comme fluide régénérant.

Selon l'invention, l'introduction du fluide traité de régénération dans la colonne d'adsorption à régénérer est réalisée à contre-courant du sens d'introduction de la charge à traiter dans la colonne lorsque cette dernière fonctionnait en mode d'adsorption. Ce mode de fonctionnement est avantageux car il nécessite moins d'apport de chaleur pour obtenir la même qualité de régénération, ce qui se traduit donc par un gain de coût opératoire.

Un autre avantage lié à l'invention est que l'on dispose d'un procédé qui fonctionne de manière autonome. Un autre avantage du procédé selon l'invention réside dans le fait que l'unité de traitement peut être aisément adaptée à la charge à traiter et en particulier aux impuretés qu'elle contient.

De façon avantageuse, l'unité de traitement est dimensionnée pour ne traiter que la quantité de fluide interne nécessaire (i.e. la charge d'hydrocarbures ou l'effluent d'hydrocarburé traité) pour la régénération des colonnes d'adsorption de la première unité d'adsorption.

De préférence, le procédé est mis en oeuvre de telle manière que l'on permute le mode de fonctionnement des première et deuxième colonnes d'adsorption de sorte que la deuxième colonne d'adsorption fonctionne en adsorption et la première colonne fonctionne en régénération. La permutation peut être faite périodiquement ou en fonction du taux de saturation du solide adsorbant.

Selon l'invention, l'unité de traitement de l'étape b) est une seconde unité d'adsorption comprenant une troisième et quatrième colonne d'adsorption comprenant respectivement un troisième et quatrième solide adsorbant. On met en contact dans la troisième colonne d'adsorption la charge secondaire d'hydrocarbure liquide avec le troisième solide adsorbant de manière à produire la charge secondaire liquide d'hydrocarbures traitée et on envoie l'effluent chargé en impuretés issu de la deuxième colonne d'adsorption qui est en régénération dans la quatrième colonne d'adsorption de manière à régénérer le quatrième solide adsorbant et évacuer un effluent chargé en impuretés.

Dans un mode de réalisation préféré, on permute le mode de fonctionnement des troisième et quatrième colonnes d'adsorption de sorte que la quatrième colonne d'adsorption fonctionne en adsorption et la troisième colonne fonctionne en régénération. La permutation peut être faite périodiquement ou en fonction du taux de saturation du solide adsorbant.

Selon une variante, le mode de fonctionnement en adsorption ou en régénération des quatre colonnes d'adsorption est permuté simultanément : on permute simultanément le mode de fonctionnement en adsorption ou en régénération des première et troisième colonnes et, en même temps, on permute simultanément le mode de fonctionnement en adsorption ou en régénération des deuxième et quatrième colonnes d'adsorption.

Selon cette variante préférée de réalisation de l'invention, les troisième et quatrième colonnes d'adsorption peuvent être dimensionnées de manière à ce qu'elles soient saturées en impuretés, simultanément ou après les première et deuxième colonnes d'adsorption. Dans le cadre de cette variante, le mode de fonctionnement des quatre colonnes d'adsorption peut être permuté simultanément lorsque la première ou la deuxième colonne d'adsorption fonctionnant en adsorption est saturée en impuretés. Selon cette variante préférée, les première et troisième colonnes d'adsorption d'une part ou les deuxième et quatrième colonnes d'adsorption d'autre part fonctionnent simultanément soit en adsorption, soit en régénération. Ainsi, par exemple, lorsque les première et troisième colonnes d'adsorption fonctionnent simultanément en adsorption, on régénère le deuxième solide adsorbant de la deuxième colonne d'adsorption avec la charge secondaire chauffée à l'étape c) afin de désorber les impuretés du deuxième solide adsorbant et on régénère le quatrième solide adsorbant de la quatrième colonne d'adsorption avec l'effluent issu de la deuxième colonne d'adsorption. Réciproquement, lorsque les deuxième et quatrième colonnes d'adsorption fonctionnent simultanément en adsorption, on régénère le premier solide adsorbant de la première colonne d'adsorption avec la charge secondaire chauffée à l'étape c) afin de désorber les impuretés du premier solide adsorbant et on régénère le troisième solide adsorbant de la troisième colonne d'adsorption avec l'effluent issu de la première colonne d'adsorption.

Le procédé de la présente invention s'applique au traitement d'une charge d'hydrocarbures qui se trouve en phase liquide à la température et à la pression de fonctionnement de l'unité d'adsorption/régénération.

Le procédé selon l'invention est applicable à une charge d'hydrocarbures sélectionnée parmi une coupe comprenant des hydrocarbures ayant 2 à 8 atomes de carbone et une coupe comprenant des hydrocarbures ayant des points d'ébullition compris entre 0 et 200°C. Par exemple il peut s'agir d'une coupe comprenant du propane, butane, pentane, hexane, etc, seuls ou en mélange, d'une coupe naphta légère ou lourde. La charge d'hydrocarbures à purifier contient de préférence moins de 50% en poids d'oléfines par rapport au poids total de la coupe, de manière préférée moins de 20% en poids et encore plus préférée moins de 10% en poids.

Selon l'invention, les solides adsorbants mis en oeuvre dans le procédé sont choisis parmi les oxydes métalliques (massiques ou en mélange avec un/des liant(s) ou déposés sur un support), les sulfures métalliques (massiques ou en mélange avec un/des liant(s) ou déposés sur un support), les métaux réduits (massiques ou en mélange avec un/des liant(s) ou déposés sur un support) qui peuvent être éventuellement dopés et/ou sulfurés, les MOF ("Metal Organic Framework" selon la terminologie anglo-saxonne) et ou leurs mélanges. De préférence ils comprennent au moins un élément sélectionné parmi les alumines activées ou promues, les argiles, les tamis moléculaires tels que les zéolites, les gels de silice, les silice-alumines, les charbons actifs.

Pour la phase d'adsorption, la température est comprise entre environ -50 à 100°C, de préférence comprise entre 0 et 50°C et la pression est comprise entre 10⁻³ à 10 MPa, de manière plus préférée entre 0,1 et 5 MPa. Pour ce qui concerne la phase de régénération, elle est conduite de préférence à une température comprise entre 100 et 350°C, de préférence entre 200 et 310°C sous une pression d'environ 10⁻³ à 10 MPa, de manière plus préférée entre 0,1 et 5 MPa.

Selon la présente invention, l'adsorption peut être mise en oeuvre en faisant appel à tout type de technologie d'adsorption connue de l'homme du métier, de préférence on utilise la technologie avec un solide adsorbant en lit fixe.

Selon la présente invention, les impuretés à éliminer de la charge d'hydrocarbures peuvent être sélectionnées parmi l'eau, les composés azotés, les composés soufrés, les composés oxygénés, les composés aromatiques, les composés chlorés, le mercure, les arsines et les phosphines seuls ou en mélange.

D'autres caractéristiques et avantages de l'invention seront mieux compris à la lecture de la description en se référant aux dessins parmi lesquels:
la figure 1 montre un diagramme bloc d'un premier exemple d'une unité de purification selon l'invention.
la figure 2 montre un diagramme bloc d'un second exemple d'une unité de purification dans lequel l'unité de traitement est un réacteur d'hydrogénation.
la figure 3 montre un diagramme bloc d'un troisième exemple d'une unité de purification dans lequel l'unité de traitement est une colonne d'adsorption non régénérable.
les figures 4 et 5 montrent un diagramme bloc semblable respectivement aux figures 1 et 2, mais dans lequel l'introduction de la charge à traiter dans la colonne fonctionnant en phase d'adsorption est à co-courant du sens d'introduction du fluide de régénération dans la colonne d'adsorption qui est en phase de régénération.
Les figures ne sont pas dessinées à l'échelle. Généralement, des éléments semblables sont dénotés par des références semblables dans les figures.

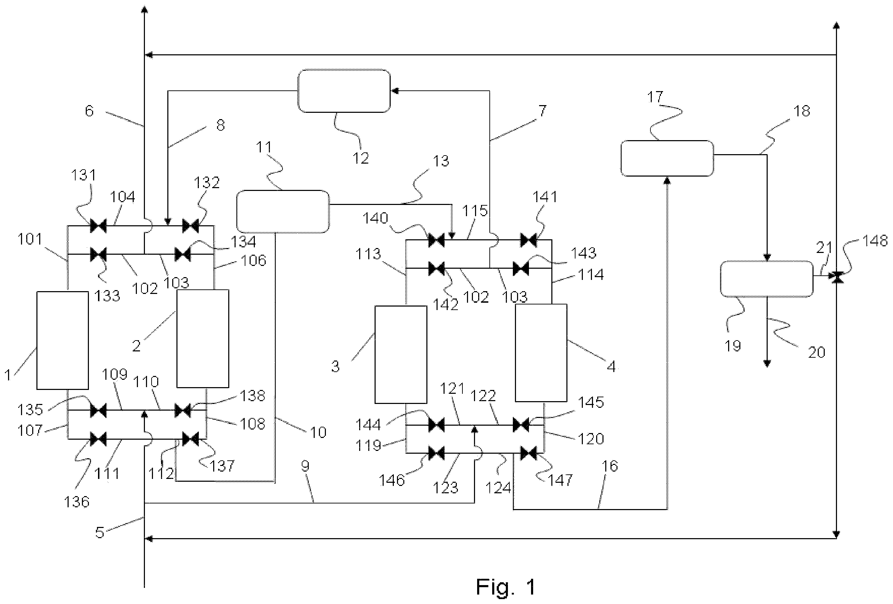

la figure 1 représente un premier exemple de réalisation d'une unité de purification selon l'invention permettant de mettre en oeuvre le procédé selon l'invention. Cette unité comprend :
   - une première colonne d'adsorption 1 remplie d'un premier solide adsorbant;
   - une seconde colonne d'adsorption 2 contenant un second solide adsorbant, identique au premier adsorbant, et agencée de manière à fonctionner en alternance avec la première colonne d'adsorption 1 de sorte que lorsque la première colonne 1 est en phase d'adsorption, la deuxième colonne 2 est en phase de régénération et quand la première colonne d'adsorption 1 est saturée, on permute les rôles respectifs des deux colonnes 1,2;
   - une unité de traitement au sens large, qui est dans l'exemple présent constitué par une second unité d'adsorption/régénération comprenant une troisième et quatrième colonne d'adsorption 3, 4 fonctionnant parallèlement l'une avec l'autre de manière alternative en mode adsorption et régénération;
   - des moyens de chauffage 12 pour chauffer le fluide issu de l'une des troisième et quatrième colonnes d'adsorption 3,4.

En fonctionnement, la charge à traiter est amenée dans la première colonne d'adsorption 1, via les lignes 5, 111, 107. La colonne 1 qui travaille en adsorption est opérée à une température généralement comprise entre -50 à 100°C, de préférence comprise entre 0 et 50°C et à une pression comprise entre 10⁻³ à 10 MPa, de manière préférée entre 0,1 et 5 MPa. Les colonnes d'adsorption 1,2 sont remplies d'un solide adsorbant ou un mélange de solides adsorbants choisi parmi les oxydes métalliques (massiques ou en mélange avec un/des liant(s) ou déposés sur un support), les sulfures métalliques (massiques ou en mélange avec un/des liant(s) ou déposés sur un support), les métaux réduits (massiques ou en mélange avec un/des liant(s) ou déposés sur un support) qui peuvent être éventuellement dopés et/ou sulfurés, les MOF ("Metal Organic Framework" selon la terminologie anglo-saxonne). De préférence le solide adsorbant ou le mélange de solides adsorbants est choisi parmi les alumines activées ou promues, les argiles, les tamis moléculaires tels que les zéolites, les gels de silice, les silice-alumines, les charbons actifs, Les solides adsorbant mis en oeuvre sont bien entendu sélectionnés en fonction des impuretés à adsorber. A titre d'exemple (liste non exhaustive), les impuretés sont l'eau, les composés azotés, les composés soufrés, les composés oxygénés, les composés aromatiques, les composés chlorés, le mercure, les arsines et les phosphines.

Le procédé de purification selon l'invention s'applique à toute charge d'hydrocarbures qui se trouve en phase liquide dans les conditions de température et de pression de fonctionnement de la colonne d'adsorption. Ainsi la charge d'hydrocarbures peut être sélectionnée parmi une coupe comprenant des hydrocarbures ayant 2 à 8 atomes de carbone et une coupe comprenant des hydrocarbures ayant des points d'ébullition compris entre 0 et 200°C. Par exemple il peut s'agir d'une coupe comprenant du propane, butane, pentane, hexane, etc, seuls ou en mélange, d'une coupe naphta légère ou lourde. La charge d'hydrocarbures à purifier contient de préférence moins de 50% en poids d'oléfines par rapport au poids total de la coupe, de manière préférée moins de 20% en poids et encore plus préférée moins de 10% en poids.

L'effluent purifié est évacué de la colonne 1 via les lignes 101,102, 6 vers une autre unité ou tout simplement envoyé dans une zone de stockage.

En parallèle et de façon concomitante, la colonne 2 fonctionne en phase de régénération afin de restaurer la capacité d'adsorption des solides adsorbants chargé en impuretés lors d'un cycle de fonctionnement antérieur. Pour réaliser cette régénération par modulation de la température (procédé TSA), il faut disposer d'un fluide "propre" et chaud. Afin de répondre au problème de disposer d'un fluide régénérant facilement accessible et économique, le procédé selon l'invention utilise un fluide qui provient d'un flux interne au procédé. La solution dans ce mode de réalisation consiste à prendre une partie de la charge à traiter et à la purifier dans la seconde unité d'adsorption pour limiter les phénomènes de désactivation vis-à-vis du solide adsorbant à régénérer.

Selon l'exemple 1, le fluide régénérant est issu d'une unité de traitement qui fait partie intégrante de l'unité de purification. L'unité de traitement comprend deux colonnes d'adsorption 3 et 4, formant une seconde unité d'adsorption, qui fonctionnent parallèlement et alternativement en adsorption et en régénération.

Une fraction de la charge à traiter est amenée dans la colonne d'adsorption 3 via les lignes 9, 121, 119 afin de la purifier. L'effluent traité qui sert de fluide régénérant pour la première unité d'adsorption est évacué grâce aux lignes 113, 102 et 7 vers le train de chauffe 12. Le train de chauffe permet de porter l'effluent traité qui est en phase liquide à une température adéquate pour désorber les impuretés retenues par le solide adsorbant de la colonne 2 (procédé TSA). Dans le cadre de l'invention, le chauffage peut être également effectué de sorte à vaporiser l'effluent et ainsi former un gaz de purge.

L'effluent traité et chaud (fluide régénérant) est transféré vers la colonne d'adsorption 2 via la ligne 8, 104, 106 et mis en contact avec le solide adsorbant chargé (voire saturé) en impuretés afin de désorber lesdites impuretés. La phase de régénération est conduite de préférence à une température comprise entre 100 et 350°C, de préférence entre 200 et 310°C sous une pression d'environ 10⁻³ à 10 MPa, de manière préférée entre 0,1 et 5 MPa. Comme indiqué sur la figure 1, l'introduction du fluide régénérant dans la colonne d'adsorption 2 qui fonctionne en mode régénération, est faite à contre-courant par rapport au sens d'introduction de la charge à traiter dans la colonne d'adsorption 1. Plus précisément, en référence à la figure 1, la charge à traiter est introduite par la ligne 5 en fond de la colonne d'adsorption 1 tandis que le fluide régénérant, via les lignes 8, 104, 106, est envoyé en tête de la colonne d'adsorption 2.

Le fluide régénérant chaud après circulation dans la deuxième colonne d'adsorption 2 et chargé en impuretés libérés par le solide adsorbant est évacué de la deuxième colonne d'adsorption 2 par les lignes 108, 112 et 10. Comme montré sur la Fig. 1, le fluide régénérant chaud chargé en impuretés est avantageusement utilisé comme fluide pour régénérer le solide adsorbant de la quatrième colonne d'adsorption 4. Avant son passage dans la quatrième colonne 4, le fluide régénérant est de nouveau chauffé dans un dispositif de chauffage 11, qui est par exemple un four électrique, pour porter le fluide à sa température d'opération en régénération. Le fluide régénérant est ensuite introduit par les lignes 13,115,114 dans la colonne 4 où il est mis en contact avec le solide adsorbant à régénérer. De manière préférée, comme dans le cas de l'unité d'adsorption principale, l'unité de traitement du fluide de régénération est configurée de sorte que l'introduction dudit fluide dans la colonne d'adsorption 3 en mode de fonctionnement "adsorption" est réalisée à contre-courant du sens d'introduction du fluide régénérant issu de la colonne 2 dans la colonne 4 en phase de régénération.

Le fluide résiduaire chargé en impuretés sortant de la quatrième colonne d'adsorption 4 est évacué par la ligne 120, 124 et 16 vers un condenseur 17 où il est refroidi. Le liquide extrait du condenseur 17 par la ligne 18 peut être envoyé soit en amont soit en aval de la première unité d'adsorption en fonction de sa teneur en impuretés.

De façon avantageuse, comme représenté sur la Fig. 1, le liquide issu du condenseur 17 est transféré dans un ballon séparateur 19 où l'eau libre condensée est séparée de la phase hydrocarbure. Dans ce cas, l'eau de condensation est acheminée via la ligne 20 vers une unité de traitement des eaux tandis que la phase hydrocarbure est soutirée par la ligne 21 et envoyée soit en amont ou en aval de la première unité d'adsorption/régénération en fonction de sa teneur en impuretés. Comme mentionné plus haut, la phase de régénération de la colonne 4 est conduite de préférence à une température comprise entre 100 et 350°C, de préférence entre 200 et 310°C sous une pression d'environ 10⁻³ à 10 MPa, de manière préférée entre 0,1 et 5 MPa.

Lorsque le temps de cycle de fonctionnement de la colonne d'adsorption 1 est atteint, par exemple fixée par une valeur seuil de capacité en adsorption, on arrête l'alimentation en charge d'hydrocarbure à traiter dans la colonne 1 et on permute le mode de fonctionnement des colonnes 1 et 2. Ainsi dans le cycle subséquent, la colonne 1 fonctionne en régénération tandis que la colonne 2 travaille en adsorption.

Ce mode de fonctionnement est appliquée à la seconde unité d'adsorption dont les colonnes 3 et 4 fonctionnent alternativement en mode régénération et adsorption. Par ailleurs et de préférence, le mode d'introduction à contre-courant décrit ci-avant pour l'unité d'adsorption principale (colonne 1 et 2) est applicable pour la mise en oeuvre de l'unité de traitement du fluide de régénération (colonne 3 et 4).

Selon un mode préféré de fonctionnement, le basculement de fonctionnement des colonnes 1 et 2 peut déclencher le basculement de fonctionnement de celles des colonnes 3 et 4. Selon une variante préférée de réalisation de l'invention, les colonnes 3 et 4 sont dimensionnées de manière à ce qu'ils soient saturés en impuretés, simultanément ou après les colonnes 1 et 2. Dans le cadre de cette variante, le mode de fonctionnement des quatre colonnes est permuté simultanément, lorsque la première ou la deuxième colonne fonctionnant en adsorption est saturée en impuretés. Selon cette variante préférée, les colonnes 1 et 3 d'une part ou 2 et 4 d'autre part fonctionnent simultanément soit en adsorption, soit en régénération. Ainsi, par exemple, lorsque les colonnes 1 et 3 fonctionnent simultanément en adsorption, on régénère le deuxième solide adsorbant avec la charge secondaire chauffée à l'étape c) afin de désorber les impuretés du deuxième solide adsorbant et on régénère le quatrième solide adsorbant de la quatrième colonne d'adsorption 4 avec l'effluent issu de la deuxième colonne d'adsorption 2. Réciproquement, lorsque les colonnes 2 et 4 fonctionnent simultanément en adsorption, on régénère le premier solide adsorbant avec la charge secondaire chauffée à l'étape c) afin de désorber les impuretés du premier solide adsorbant et on régénère le troisième solide adsorbant de la troisième colonne d'adsorption 3 avec l'effluent issu de la première colonne d'adsorption 1.

Le second mode de réalisation (non-conforme à l'invention) de l'unité de purification est semblable à celui de l'exemple 1 mais diffère essentiellement par le fait que la seconde unité d'adsorption permettant de traiter la charge afin de la rendre compatible comme fluide régénérant est remplacée par un réacteur d'hydrogénation sélective.

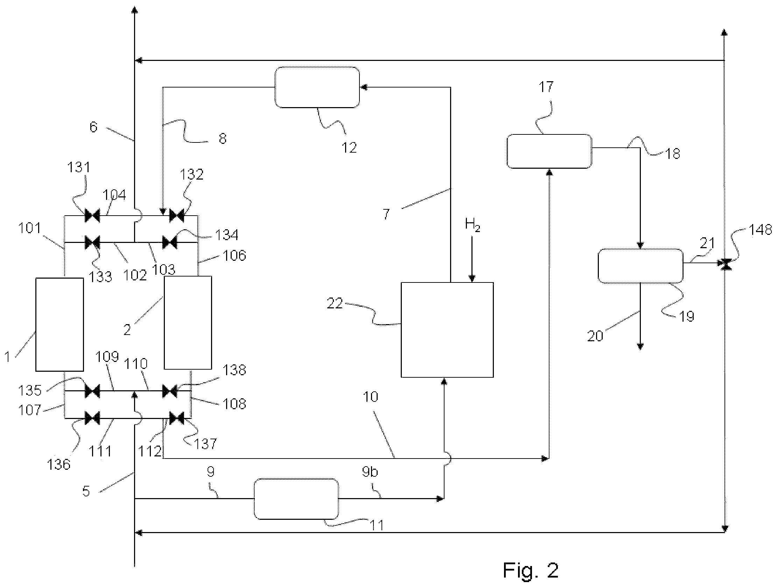

L'unité de purification représentée à la figure 2 comprend :
- une unité d'adsorption incluant deux colonnes d'adsorption 1,2, travaillant alternativement en adsorption et en régénération;
- un réacteur d'hydrogénation sélective 22;
- des moyens de chauffage 12, pour chauffer le fluide traité par le réacteur d'hydrogénation totale et l'amener à l'état vapeur.

La description relative au mode de fonctionnement de la première unité d'adsorption de la figure 1 est applicable à l'unité d'adsorption de la figure 2.

Selon le second mode de réalisation l'unité de traitement de la charge qui permet de produire in-situ le fluide régénérant est une unité d'hydrogénation sélective. La fonction principale de cette unité de traitement est de transformer les composés oléfiniques, qui sont des précurseurs de coke, en composés paraffiniques.

En référence à la figure 2, la charge d'hydrocarbures est prélevée par la ligne 9 et envoyée dans un réacteur d'hydrogénation sélective 22 où elle est mise en contact avec de l'hydrogène en présence d'un catalyseur d'hydrogénation sélective. La charge liquide est préalablement chauffée au moyen du dispositif de chauffe 11 (par exemple un échangeur à la vapeur) avant d'être introduite dans le réacteur d'hydrogénation sélective 22. L'effluent traité qui est extrait par la ligne 7 du réacteur d'hydrogénation 22 est alors chauffé, grâce à un train de chauffe 12 qui peut être composé d'un échangeur à vapeur et d'un four électrique disposés de manière successive. Le train de chauffe 12 permet de chauffer l'effluent traité afin de produire un fluide régénérant. Le fluide régénérant ainsi obtenu de façon interne au procédé est alors transféré par les lignes 8,106 dans la deuxième colonne d'adsorption 2 afin de régénérer le second solide adsorbant.

Comme montré sur la figure 2, l'introduction du fluide de régénération issu de l'unité de traitement 22 dans la colonne d'adsorption 2 en régénération se fait à contre-courant du sens dans lequel la charge à traiter est envoyée dans la colonne d'adsorption fonctionnant en mode adsorption.

L'effluent chargé en impuretés est évacué de la deuxième colonne 2 par les lignes 108, 112 et 10 vers un échangeur 17 où il est refroidi. Le liquide extrait de l'échangeur 17, via la ligne 18 peut être recyclé soit en amont soit en aval de l'unité d'adsorption/régénération en fonction de sa teneur en impuretés. En référence à la figure 2, le liquide est d'abord envoyé dans un ballon séparateur 19 afin de séparer l'eau de la phase hydrocarbure liquide. L'eau de condensation est transférée grâce à la ligne 20 vers une unité de traitement des eaux tandis que la phase hydrocarbure est envoyée soit en amont soit en aval de l'unité d'adsorption en fonction de sa teneur en impuretés.

Le troisième mode de réalisation (non-conforme à l'invention) est semblable à celui de l'exemple 2 mais diffère en ce que l'unité d'hydrogénation sélective est remplacée par une unité d'adsorption non régénérable ("guard bed" en anglais).

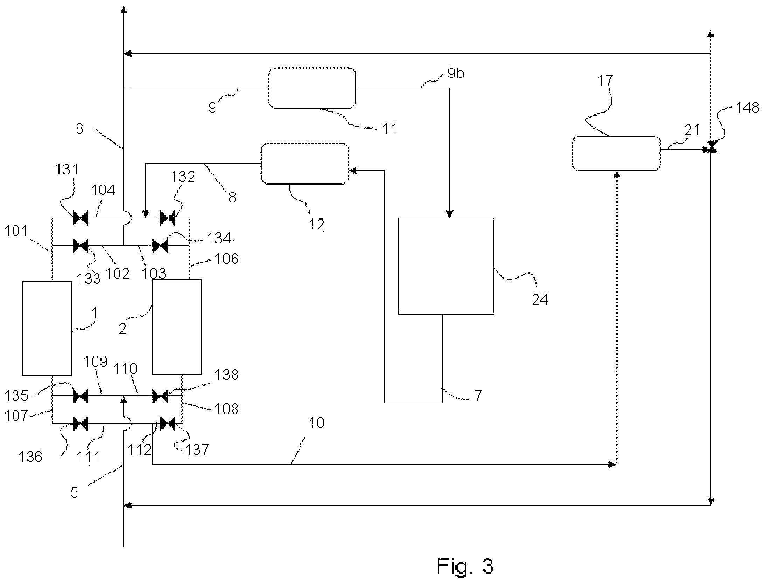

L'unité de purification représentée à la figure 3 comprend donc :
- une unité d'adsorption constituée par deux colonnes d'adsorption 1,2, travaillant alternativement en adsorption et en régénération;
- une colonne d'adsorption non régénérable 24;
- des moyens de chauffage 12, pour chauffer le fluide traité issu de la colonne d'adsorption non régénérable 24.

Le mode de fonctionnement de la première unité d'adsorption de la figure 1 est applicable à l'unité d'adsorption de la figure 3 et n'est donc pas décrit à nouveau.

Selon ce troisième mode de réalisation, on utilise comme fluide régénérant, interne au procédé, l'effluent traité par l'unité d'adsorption 1,2. Le fluide traité est préalablement purifié par passage à travers une colonne d'adsorption 24 non régénérable. Le but de ce traitement est par exemple de réduire la teneur en produit organo-soufrés de l'effluent traité. Les produits organo-soufrés concernés par ce traitement sont par exemple les mercaptans et les sulfures qui sont des précurseurs de coke à haute température.

En référence à la figure 3, une fraction de l'effluent traité par l'unité d'adsorption 1,2 est soutirée par la ligne 9, puis chauffée par l'intermédiaire d'un train de chauffe 11 (par exemple un échangeur à vapeur) et envoyée dans la colonne d'adsorption non régénérable 24.

L'effluent purifié sortant de la colonne d'adsorption non régénérable 24 par la ligne 7 est alors chauffé par passage à travers un train de chauffe 12. Le fluide chaud, qui peut être liquide ou gazeux, vient alimenter la colonne à régénérer de l'unité d'adsorption 1,2 via les lignes 8, 104 et 106 ou 8, 104 et 101.

De manière identique aux modes de réalisation des figures 1 et 2, le fluide de régénération après traitement dans la colonne d'adsorption non régénérable 24 et chauffage dans le train de chauffe 11 est introduit par les lignes 8, 104, 106 ou 8, 104 et 101 à contre-courant par rapport au sens d'introduction de la charge à traiter dans les colonnes 1 ou 2 (en mode d'adsorption) de l'unité d'adsorption principale.

Comme dans les précédents exemples, le fluide régénérant chargé en impuretés est évacué par la ligne 108,10 vers un échangeur 17. Le liquide extrait de l'échangeur 17 est recyclé soit en amont soit en aval de l'unité d'adsorption/régénération en fonction de sa teneur en impuretés.

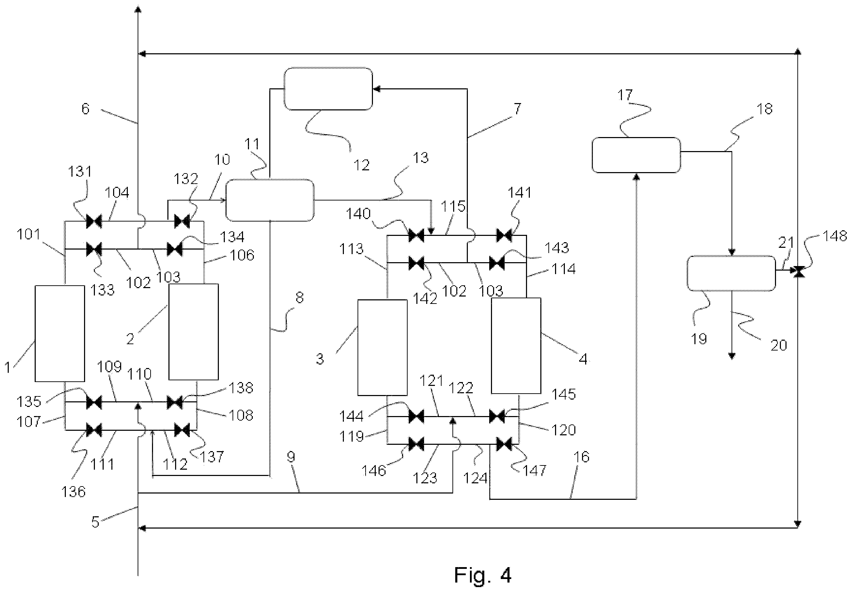

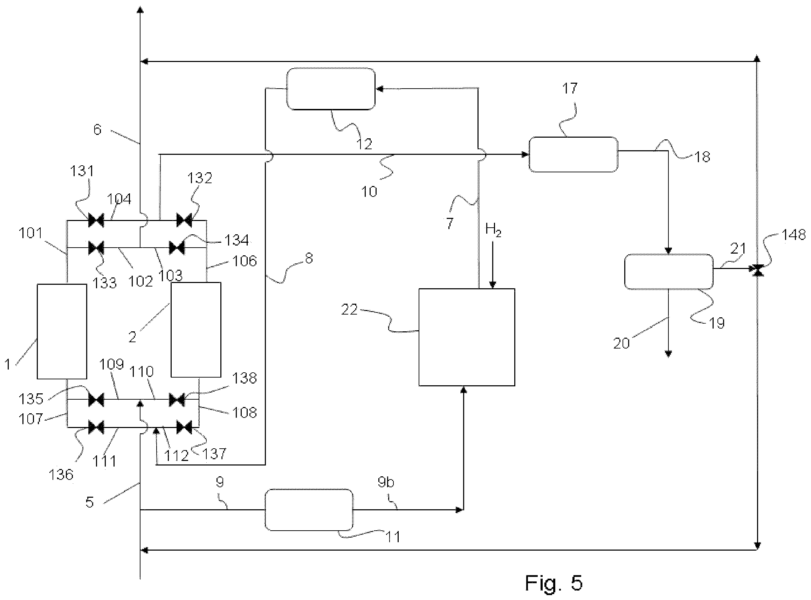

En référence aux figures 4 et 5, les modes de réalisation de ces figures sont identiques respectivement aux figures 1 et 2 à l'exception du fait que le fluide de régénération issu des unités de traitement est introduit à co-courant par rapport au sens d'introduction de la charge à traiter dans les colonnes 1 ou 2 (en mode d'adsorption) de l'unité d'adsorption principale.

### Exemple 1

L'exemple 1 illustre le fonctionnement du procédé selon la Fig. 1.

Dans cet exemple, on se propose de purifier une charge GPL à un débit de 9820 kg/h et dont la composition (exprimée en % poids) est indiquée dans le tableau 1.

**Tableau 1: Composition de la charge GPL**

| | |
|---|---|
| Ethane | 2,1 |
| Propane | 57, 4 |
| i-Butane | 10, 0 |
| n-Butane | 30, 0 |
| i-Pentane | 0,3 |
| n-Pentane | 0,2 |

La charge GPL contient en outre les impuretés qui sont regroupées dans le tableau 2:

**Tableau 2: Impuretés de la charge GPL**

| | |
|---|---|
| Eau | 500 ppm poids |
| Soufre total | 20 ppm poids en tant que S |
| Ethylmercaptan | 2 ppm en tant que S |
| Disulfures. | 10 ppm en tant que S |
| Autres soufrés (CS2) | 8 ppm en tant que S |

Le but de la purification est de sécher la charge GPL afin d'éliminer l'eau pour atteindre la spécification d'une teneur en eau inférieure à 10 ppm.

A cette fin, l'élimination de l'eau est réalisée au moyen de l'unité d'adsorption comprenant deux colonnes d'adsorption 1 et 2 fonctionnant parallèlement et alternativement en adsorption et en régénération. Les colonnes d'adsorption 1 et 2 ont les caractéristiques suivantes :
- diamètre: 700mm
- hauteur du lit d'adsorbant : 5400mm

Ces colonnes sont remplies d'un mélange de solides adsorbant comprenant 30% volume d'AxSorb A (marque commerciale) et 70% volume d'AxSorb 543 (marque commerciale), commercialisés par la société Axens.
- Lorsque les colonnes travaillent en adsorption, celles-ci sont opérées à une température d'environ 40°C et à une pression de 1,4 MPa. Après passage dans la première unité d'adsorption, on obtient un GPL purifié ayant une teneur en eau de 9 ppm (poids) et en soufre total de 20 ppm (poids) en tant que S.

Les caractéristiques des colonnes d'adsorption 3 et 4 de l'unité d'adsorption de traitement de la charge d'hydrocarbures secondaire sont les suivantes :
- diamètre : 500mm
- hauteur du lit d'adsorbant : 6200mm.

Ces colonnes sont remplies d'un mélange de solides adsorbant comprenant 12% volume d'AxSorb A (marque commerciale) et 88% volume d'AxSorb 913 (marque commerciale), commercialisés par la société Axens. Le mélange d'adsorbants mentionné ci-dessus permet non seulement d'adsorber l'eau mais également les molécules soufrées présentes dans la charge GPL. Une fraction de la charge GPL à la température de 40°C est soutirée en amont de la première unité d'adsorption et envoyée dans la colonne d'adsorption 3. La colonne 3 est dimensionnée de sorte à traiter 1300 kg/h de charge ayant la même composition que celle montrée dans les tableaux 1 et 2. La température et la pression de fonctionnement de la colonne 3 en adsorption sont de 40°C et de 1,7 MPa respectivement. L'effluent traité sortant de la colonne 3 et présentant des teneurs en eau et en soufre total inférieures à 1 ppm poids, est chauffé dans un train de chauffe à 310°C, température à laquelle le GPL traité est sous forme vapeur, avant d'être envoyé à travers l'une des colonnes de la première unité d'adsorption qui est dans sa phase de régénération. L'introduction du GPL traité est faite à contre-courant par rapport au sens d'introduction de la charge à traiter dans la colonne lorsqu'elle fonctionne en mode adsorption. Le train de chauffe 12 comprend un échangeur à la vapeur et un four électrique principal.

La régénération s'effectue à une température d'environ 310°C et sous une pression d'environ 1,5 MPa.

Le fluide régénérant chaud après circulation dans la colonne d'adsorption 2 en régénération est utilisé comme fluide pour régénérer le solide adsorbant de la colonne 4 de la seconde unité d'adsorption. Avant son passage dans ladite colonne en régénération, le fluide régénérant est de nouveau chauffé dans un dispositif de chauffage 11, qui est un four électrique secondaire, pour ramener la température du fluide à environ 310°C.

Le fluide résiduaire chargé en eau et en impuretés soufrées sortant de la colonne 4 de la seconde unité d'adsorption est évacué par la ligne 16 vers un condenseur 17 où il est refroidi et condensé à 50°C.

Le bilan thermique des dispositifs de chauffage pour faire fonctionner l'unité de purification selon ce premier mode de réalisation, pendant un cycle d'adsorption de 24 heures est le suivant:
- puissance mise en oeuvre pour le dispositif d'échangeur à la vapeur = 190kW
- puissance mise en oeuvre pour le four électrique principal = 190kW
- **puissance mise en oeuvre pour le four électrique secondaire = 55kW**
soit une puissance de chauffe totale nécessaire d'environ 435 kW.

En revanche si on découple le fonctionnement des deux unités d'adsorption, qui opèrent donc de manière indépendante l'une de l'autre, la puissance de chauffe pour chacune des unités d'adsorption est de 380 kW, ce qui nécessite une puissance de chauffe totale de 760 kW.

Ainsi grâce au procédé selon l'invention, il est possible de réaliser une économie d'énergie d'environ 40%.

Par ailleurs, avec le procédé selon l'invention on s'affranchit du besoin de disposer d'un fluide régénérant extérieur à l'unité de purification dont l'importation et le stockage représentent un coût non négligeable.

### Exemple 2

Le second exemple, qui illustre le mode de fonctionnement de l'unité décrite dans la Fig. 2, propose de purifier une charge d'hydrocarbures, à un débit de 75575 kg/h, dont la composition est donnée dans le tableau 3 (en % poids):

**Tableau 3: Composition de la charge d'hydrocarbures**

| | |
|---|---|
| H2 | 0,14 |
| METHANE | 0,01 |
| PROPANE | 1,14 |
| PROPENE | 0,02 |
| I-BUTANE | 42,22 |
| BUTANE | 52,59 |
| I-BUTENE | 0,02 |
| 1-BUTENE | 0,24 |
| Cis-2-BUTENE | 0,92 |
| Trans-2-BUTENE | 1,72 |
| PENTANE | 0,56 |
| PENTENE | 0,34 |
| HEXANE | 0,07 |
| HEPTANE | 0,01 |

et qui contient les impuretés (en ppm poids) regroupées dans le tableau 4

**Tableau 4: Composition en impuretés de la charge d'hydrocarbures**

| | |
|---|---|
| Eau | 50 |
| COS | 0,1 |
| Soufre total | 0,1 |
| Acétonitrile | 2,0 en tant que N |
| Acétone | 50,0 |

La charge à purifier est ainsi traitée dans l'unité d'adsorption qui comprend deux colonnes d'adsorption 1, 2 ayant les caractéristiques suivantes :
- diamètre: 1900 mm
- hauteur du lit d'adsorbant : 10000 mm.

Ces colonnes sont remplies d'un mélange de solides adsorbant, comprenant en volume 90 % d'AxSorb 911 (marque commerciale) et 10% d'AxSorb 980 (marque commerciale) commercialisés par la société Axens, qui permet de retenir spécifiquement les molécules d'eau et les molécules azotées et l'acétone.

La charge d'hydrocarbure liquide à traiter est amenée dans la première colonne d'adsorption 1 qui travaille en adsorption à une température de 40°C et à une pression de 2,2 MPa. Le traitement dans la colonne d'adsorption permet d'obtenir un effluent d'hydrocarbures dont la composition (ppm poids) en impuretés est donnée dans le tableau 5:

**Tableau 5: Composition en impuretés de la charge d'hydrocarbures traitée**

| | |
|---|---|
| Eau | 0,1 |
| Acétonitrile | 0,1 |
| Acetone | 0,1 |

De façon simultanée, la deuxième colonne de l'unité d'adsorption 2 est en phase de régénération afin de restaurer les capacités d'adsorption des solides adsorbant saturés en impuretés lors d'un précédent cycle. A cette fin une fraction de la charge d'hydrocarbures à traiter est prélevée en amont de l'unité d'adsorption à un débit de 9000 kg/h et envoyée dans un réacteur d'hydrogénation sélective 22. La charge liquide qui est à une température d'environ 40°C est chauffée au moyen du dispositif de chauffe 11 (un échangeur à la vapeur) de manière à porter la température à environ 80°C en entrée du réacteur d'hydrogénation sélective 22.

Le réacteur d'hydrogénation sélective présente les caractéristiques suivantes:
- diamètre : 1100mm;
- hauteur du lit de catalyseur: 8450mm;
- catalyseur : LD265 commercialisé par la société Axens;
- pression : 2,5 MPa;
- débit de la charge en entrée du réacteur : 9000 kg/h;
- débit H2 (pureté 99,9% en volume): 68 kg/h

En raison de l'exothermicité de la réaction d'hydrogénation, la température de l'effluent en sortie de réacteur d'hydrogénation est d'environ 102°C et a la composition (% poids) donnée dans le tableau 6:

**Tableau 6: Composition de la charge d'hydrocarbures traitée en sortie du réacteur hydrogénation sélective**

| | |
|---|---|
| H2 | 0,02 |
| METHANE | 0,01 |
| PROPANE | 1,14 |
| I-BUTANE | 42,08 |
| BUTANE | 55,28 |
| I-BUTENE | 0,01 |
| 1-BUTENE | 0,00 |
| Cis-2-BUTENE | 0,08 |
| Trans-2-BUTENE | 0,20 |
| PENTANE | 1,18 |

L'effluent extrait du réacteur d'hydrogénation 22 est alors chauffé, grâce à un train de chauffe 12 composé d'un échangeur à vapeur et d'un four électrique disposés de manière successive, jusqu'à une température d'environ 310°C de sorte qu'il se trouve sous phase vapeur. Le gaz régénérant ainsi produit de façon interne au procédé est alors transféré dans la colonne d'adsorption à régénérer, à contre-courant par rapport au sens d'introduction de la charge traitée. La régénération s'effectue à une température d'environ 310°C et sous une pression d'environ 1,6 MPa.

L'effluent gazeux chargé en impuretés est évacué de la deuxième colonne en régénération vers un condenseur où il est refroidi à 50°C.

Dans le schéma proposé on obtient alors le bilan thermique suivant pour un temps de cycle d'adsorption de 18 heures:
- puissance échangeur à vapeur 11 = 260kW
- puissance échangeur à vapeur du train de chauffe 12 = 1365kW
- puissance four électrique secondaire du train de chauffe 12 = 1000kW
La puissance de chauffe totale est donc d'environ 2625kW. Le second mode de réalisation du procédé, par intégration de l'étape d'hydrogénation avec l'étape d'adsorption, permet de tirer profit de l'exothermicité de cette étape d'hydrogénation sélective pour chauffer le fluide et ainsi réduire la puissance de chauffe requise pour amener le gaz de purge à la température de fonctionnement.

Dans la situation où l'unité d'hydrogénation fonctionne de manière indépendante de l'unité d'adsorption (découplage de l'adsorption et de l'hydrogénation sélective), il est nécessaire de refroidir la charge hydrotraitée (en vue de son stockage et/ou son transport) puis de la réchauffer avant son utilisation comme fluide de régénération. Dans ce cas de figure le bilan thermique montre que la puissance de chauffe de l'échangeur à vapeur 11 (pour l'unité d'hydrogénation sélective) reste inchangée à 260kW tandis que les puissances de chauffe de l'échangeur à vapeur et du four électrique secondaire du train de chauffe 12 doivent être respectivement de 1690kW et 1000kW; on a donc une puissance de chauffe totale de 2960 kW à mettre en oeuvre.

Ainsi on peut réaliser une économie d'énergie d'environ 11 %. En outre avec le procédé on se libère de la contrainte de la gestion d'un fluide intermédiaire qui engendre inévitablement des coûts supplémentaires.

### Exemple 3

Le troisième exemple illustre le fonctionnement de l'unité de purification décrit dans le troisième mode de réalisation de la Fig. 3.

Le procédé est mis en oeuvre pour purifier une coupe naphta, à un débit de 13585kg/h et ayant la composition suivante (en % poids):

**Tableau 7: Composition de la coupe naphta**

| | |
|---|---|
| N-BUTANE | 0,02 |
| I-PENTANE | 5,21 |
| N-PENTANE | 5,89 |
| 2,2-DIMETHYLBUTANE | 1,17 |
| 2,3-DIMETHYLBUTANE | 4,54 |
| 2-METHYLPENTANE | 18,95 |
| 3-METHYLPENTANE | 13,69 |
| N-HEXANE | 24 |
| CYCLOPENTANE | 1,14 |
| METHYLCYCLOPENTANE | 10,32 |
| BENZENE | 2,37 |
| CYCLOHEXANE | 10,13 |
| N-HEPTANE | 1,62 |
| METHYLCYCLOHEXANE | 0,63 |
| 1,1-DIMETHYLCYCLOHEXANE | 0,32 |

La coupe naphta contient en outre les impuretés suivantes (ppm poids) :

**Tableau 8: Composition en impuretés de la coupe naphta**

| | |
|---|---|
| H2S | 2 ppm poids en tant que S |
| éthyl-mercaptan | 1 ppm poids en tant que S |
| propyl-mercaptan | 1 ppm poids en tant que S |
| CO2 | 10 ppm poids |

Le but du traitement par adsorption est d'éliminer le CO2 pour atteindre les spécifications demandées. A cette fin, on met en oeuvre une unité d'adsorption/régénération comprenant deux colonnes d'adsorption fonctionnant parallèlement et alternativement en adsorption et en régénération. Les colonnes d'adsorption 1 et 2 ont les caractéristiques suivantes :
- diamètre : 800mm
- hauteur du lit d'adsorbant : 2800mm

Les deux colonnes 1 et 2 sont remplies d'un mélange de solides adsorbant comprenant en volume 78% d'AxSorb 951 (marque commerciale) et 22% d'AxSorb 980 (marque commerciale), commercialisés par la société Axens.

Lorsqu'elles fonctionnent en mode adsorption, les colonnes 1 ou 2 travaillent à une température de 50°C et à une pression de 4 MPa.

Le traitement par adsorption de la coupe naphta dans les colonnes 1 ou 2 permet d'obtenir une coupe naphta purifiée ayant une teneur en soufre total de 5 ppm poids en tant que S et une teneur en CO2 de 1 ppm poids.

Selon cet exemple 3 on utilise un fluide interne, généré de manière in-situ au procédé et qui est obtenu par le traitement de la coupe naphta purifiée afin de réduire sa concentration en composés du type mercaptans. Le but de ce traitement est de réduire la formation de précurseurs de cokage qui sont issus de la décomposition thermique des mercaptans.

La coupe naphta purifiée par l'unité d'adsorption est d'abord chauffée par l'intermédiaire d'un échangeur à vapeur 11 jusqu'à une température d'environ 140°C, et ensuite traitée, à un débit de 2500 kg/h, dans une colonne d'adsorption remplie d'un solide adsorbant non régénérable AxTrap 405 (marque commerciale) commercialisé par la société Axens. La colonne d'adsorption 24 présente les caractéristique suivantes:
- diamètre : 600mm
- hauteur du lit d'adsorbant : 2300mm
- température : 140°C
- pression : 1,5 MPa

L'effluent désulfuré sortant de la colonne d'adsorption 24 est alors portée à une température d'environ 310°C par passage à travers un train de chauffe 12 composé d'un échangeur à vapeur et d'un four électrique. Le fluide chaud vient ensuite alimenter l'une des colonnes 1 ou 2 pour régénérer le solide adsorbant saturé en impuretés. L'alimentation est réalisée à contre-courant par rapport au sens d'introduction de la charge à traiter lorsque la colonne fonctionnait en phase d'adsoprtion. La régénération s'effectue à une température d'environ 310°C et sous une pression d'environ 1,3 MPa.

Le bilan thermique pour un temps de cycle d'adsorption de 24 heures est le suivant:
- puissance de l'échangeur à vapeur 11 = 174kW
- puissance de l'échangeur à vapeur du train de chauffe 12 = 260 kW
- puissance du four électrique du train de chauffe 12 = 288kW

Ainsi une puissance de chauffe totale de 722 kW a été nécessaire.

Si on découple le fonctionnement de l'unité d'adsorption de celui de l'unité de désulfuration, les puissances de chauffe de l'échangeur à vapeur 11 et du four électrique du train de chauffe 12 restent inchangées. Toutefois il est nécessaire d'augmenter la puissance de chauffe de l'échangeur à vapeur du train de chauffe 12 à 434 kW afin de compenser la perte calorifique due au refroidissement de la charge naphta désulfurée lorsque l'étape de désulfuration est déconnectée de l'adsorption.

Au total on a donc une puissance de chauffe de 896 kW à mettre en oeuvre.

Grâce au procédé de l'exemple 3, on réalise une économie d'énergie d'environ 20%, tout en s'affranchissant du problème de disposer d'une source externe de fluide de régénération.

### Exemple 4 (comparatif à l'exemple 1)

L'exemple 4 est en tous points identiques à l'exemple 1, mis à part le fait que la régénération est conduite en co-courant de l'adsorption et non en contre-courant (cas de l'exemple 1). La figure 4 illustre le fonctionnement du procédé.

En raison du fait que la régénération est conduite en co-courant, les caractéristiques de la régénération doivent être différentes de celles de l'exemple 1.

Les caractéristiques des colonnes d'adsorption 3 et 4 de l'unité d'adsorption de traitement de la charge d'hydrocarbures secondaire sont les suivantes :
- diamètre : 600mm
- hauteur du lit d'adsorbant : 5100mm.

Les solides utilisés et leurs répartitions respectives sont identiques à celles de l'exemple 1.

Une fraction de la charge GPL à la température de 40°C est soutirée en amont de la première unité d'adsorption et envoyée dans la colonne d'adsorption 3. La colonne 3 est dimensionnée de sorte à traiter 1540 kg/h de charge ayant la même composition que celle montrée dans les tableaux 1 et 2. La température et la pression de fonctionnement de la colonne 3 en adsorption sont de 40°C et de 1,7 MPa respectivement. L'effluent traité sortant de la colonne 3 et présentant des teneurs en eau et en soufre total inférieures à 1 ppm poids, est chauffé dans un train de chauffe à 310°C, température à laquelle le GPL traité est sous forme vapeur, avant d'être envoyé à travers l'une des colonnes de la première unité d'adsorption qui est dans sa phase de régénération. Le train de chauffe 12 comprend un échangeur à la vapeur et un four électrique principal.

La régénération s'effectue à une température d'environ 310°C et sous une pression d'environ 1,5 MPa.

Le fluide régénérant chaud après circulation dans la colonne d'adsorption en régénération est utilisé comme fluide pour régénérer le solide adsorbant de la colonne 4 de la seconde unité d'adsorption. Avant son passage dans ladite colonne en régénération, le fluide régénérant est de nouveau chauffé dans un dispositif de chauffage 12, qui est un four électrique secondaire, pour ramener la température du fluide à environ 310°C.

Le fluide résiduaire chargé en eau et en impuretés soufrées sortant de la colonne 4 de la seconde unité d'adsorption est évacué par la ligne 16 vers un condenseur 17 où il est refroidi et condensé à 50°C.

Le bilan thermique des dispositifs de chauffage pour faire fonctionner l'unité de purification selon ce premier mode de réalisation, pendant un cycle d'adsorption de 24 heures est le suivant:
- puissance mise en oeuvre pour le dispositif d'échangeur à la vapeur = 225kW
- puissance mise en oeuvre pour le four électrique principal = 225kW
- puissance mise en oeuvre pour le four électrique secondaire = 65kW
soit une puissance de chauffe totale nécessaire d'environ 515 kW.

La quantité d'énergie pour régénérer les colonnes 1 ou 2 en co-courant (exemple 4) est ainsi significativement supérieure à celle nécessaire pour la régénération en contre-courant (exemple 1)

### Exemple 5 (comparatif de l'exemple 2)

Cet exemple est en tous points identiques à l'exemple 2, mis à part le fait que la régénération des colonnes 1 ou 2 est conduite en co-courant et non en contre-courant comme c'est le cas pour l'exemple 2. Le mode de fonctionnement de l'unité décrite dans cet exemple est présenté dans la figure 5.

De façon simultanée, la deuxième colonne de l'unité d'adsorption 2 est en phase de régénération afin de restaurer les capacités d'adsorption des solides adsorbant saturés en impuretés lors d'un précédent cycle. A cette fin une fraction de la charge d'hydrocarbures à traiter est prélevée en amont de l'unité d'adsorption à un débit de 10800 kg/h et envoyée dans un réacteur d'hydrogénation sélective 22. La charge liquide qui est à une température d'environ 40°C est chauffée au moyen du dispositif de chauffe 11 (un échangeur à la vapeur) de manière à porter la température à environ 80°C en entrée du réacteur d'hydrogénation sélective 22.

Le réacteur d'hydrogénation sélective présente les caractéristiques suivantes:
- diamètre : 1200mm;
- hauteur du lit de catalyseur: 8550mm;
- catalyseur : LD265 commercialisé par la société Axens;
- pression : 2,5 MPa;
- débit de la charge en entrée du réacteur : 10800 kg/h;
- débit H2 (pureté 99,9% en volume): 82 kg/h

En raison de l'exothermicité de la réaction d'hydrogénation, la température de l'effluent en sortie de réacteur d'hydrogénation est d'environ 102°C et a la composition (% poids) donnée dans le tableau 6:

**Tableau 6: Composition de la charge d'hydrocarbures traitée en sortie du réacteur hydrogénation sélective**

| | |
|---|---|
| H2 | 0,02 |
| METHANE | 0,01 |
| PROPANE | 1,14 |
| I-BUTANE | 42,08 |
| BUTANE | 55,28 |
| I-BUTENE | 0,01 |
| 1-BUTENE | 0,00 |
| Cis-2-BUTENE | 0,08 |
| Trans-2-BUTENE | 0,20 |
| PENTANE | 1,18 |

L'effluent extrait du réacteur d'hydrogénation 22 est alors chauffé, grâce à un train de chauffe 12 composé d'un échangeur à vapeur et d'un four électrique disposés de manière successive, jusqu'à une température d'environ 310°C de sorte qu'il se trouve sous phase vapeur. Le gaz régénérant ainsi produit de façon interne au procédé est alors transféré à co-courant dans la colonne d'adsorption à régénérer. La régénération s'effectue à une température d'environ 310°C et sous une pression d'environ 1,6 MPa.

L'effluent gazeux chargé en impuretés est évacué de la deuxième colonne en régénération vers un condenseur où il est refroidi à 50°C.

Dans le schéma proposé on obtient alors le bilan thermique suivant pour un temps de cycle d'adsorption de 18 heures:
- puissance échangeur à vapeur 11 = 315kW
- puissance échangeur à vapeur du train de chauffe 12 = 1640kW
- puissance four électrique secondaire du train de chauffe 12 = 1200kW

Soit une puissance de chauffe totale d'environ 3155kW.

On voit ainsi que la régénération en co-courant (exemple 5) est plus consommatrice d'énergie que la régénération en contre-courant (exemple 1).

## Revendications

1. Procédé de purification d'une charge d'hydrocarbures comprenant des impuretés dans lequel on effectue simultanément les étapes suivantes:
a) on traite en phase liquide la charge d'hydrocarbures dans une première unité d'adsorption comprenant une première et une deuxième colonne d'adsorption (1,2) remplies respectivement d'un premier et deuxième solide adsorbant, les première et seconde colonne d'adsorption (1,2) fonctionnant en parallèle et alternativement en adsorption et en régénération, ladite charge d'hydrocarbures étant introduite dans la première colonne d'adsorption (1) et mise en contact avec le premier solide adsorbant et on soutire en sortie de la première colonne d'adsorption (1) un effluent d'hydrocarbures appauvri en impuretés;
b) on traite une charge secondaire liquide d'hydrocarbures, qui est constituée soit d'une fraction de la charge d'hydrocarbure ou d'une fraction de l'effluent d'hydrocarbures appauvri en impuretés, dans une unité de traitement (3,4,22,24) comprenant une troisième et quatrième colonne d'adsorption (3,4) fonctionnant en parallèle et alternativement en adsorption et en régénération, lesdites colonnes comprenant respectivement un troisième et quatrième solide adsorbant, et on soutire une charge secondaire liquide d'hydrocarbures traitée de ladite unité de traitement;
c) on chauffe la charge secondaire liquide d'hydrocarbures traitée issue de l'étape b);
d) on régénère le deuxième solide adsorbant de la deuxième colonne d'adsorption (2) avec la charge d'hydrocarbures secondaire chauffée à l'étape c) par mise en contact de ladite charge avec le second solide adsorbant afin de désorber les impuretés du deuxième solide adsorbant et produire un effluent chargé en impuretés,
dans lequel on met en contact dans la troisième colonne d'adsorption (3) la charge secondaire d'hydrocarbures liquide avec le troisième solide adsorbant de manière à produire la charge secondaire liquide d'hydrocarbures traitée et dans lequel on envoie l'effluent chargé en impuretés issu de la deuxième colonne d'adsorption (2) dans la quatrième colonne d'adsorption (4) de manière à régénérer le quatrième solide adsorbant et évacuer un effluent chargé en impuretés.

2. Procédé selon la revendication 1, dans lequel on permute le mode de fonctionnement des troisième et quatrième colonnes d'adsorption de sorte que la quatrième colonne d'adsorption (4) fonctionne en adsorption et la troisième colonne (3) fonctionne en régénération.

3. Procédé selon les revendications 1 ou 2, dans lequel dans l'unité de traitement de l'étape b) on élimine par adsorption au moins partiellement des composés organo-soufrés présents dans la charge secondaire liquide d'hydrocarbures.

4. Procédé selon l'une des revendications précédentes, dans lequel on permute le mode de fonctionnement des première et deuxième colonnes d'adsorption (1,2) de sorte que la deuxième colonne d'adsorption (2) fonctionne en adsorption et la première colonne (1) fonctionne en régénération.

5. Procédé selon la revendication 4, dans lequel on permute simultanément le mode de fonctionnement en adsorption ou en régénération des première et troisième colonnes (1, 3) et, en même temps, on permute simultanément le mode de fonctionnement en adsorption ou en régénération des deuxième et quatrième colonnes d'adsorption (2, 4).

6. Procédé selon l'une des revendications précédentes, dans lequel la charge d'hydrocarbures est sélectionnée parmi une coupe comprenant des hydrocarbures ayant 2 à 8 atomes de carbone et une coupe comprenant des hydrocarbures ayant des points d'ébullition compris entre 0 et 200°C.

7. Procédé selon l'une des revendications précédentes, dans lequel le solide adsorbant comprend au moins un élément sélectionné parmi les alumines activées ou promues, les argiles, les tamis moléculaires tels que les zéolites, les gels de silice, les silice-alumines, les charbons actifs, les oxydes métalliques, soit massiques, soit en mélange avec un/des liant(s), soit déposés sur un support, les sulfures métalliques, soit massiques, soit en mélange avec un/des liant(s), soit déposés sur un support, les métaux réduits, soit massiques, soit en mélange avec un/des liant(s), soit déposés sur un support, qui peuvent être éventuellement dopés et/ou sulfurés, les Metal Organic Framework (MOF).

## Patentansprüche

1. Verfahren zur Reinigung einer Kohlenwasserstoffcharge, umfassend Verunreinigungen, wobei gleichzeitig die folgenden Schritte durchgeführt werden:
a) die Kohlenwasserstoffcharge wird in Flüssigphase in einer ersten Adsorptionseinheit behandelt, umfassend eine erste und eine zweite Adsorptionssäule (1, 2), die jeweils mit einem ersten und zweiten festen Adsorptionsmittel gefüllt sind, wobei die erste und zweite Adsorptionssäule (1, 2) parallel und alternativ zur Adsorption und zur Regeneration arbeiten, wobei die Kohlenwasserstoffcharge in die erste Adsorptionssäule (1) eingebracht und mit dem ersten festen Adsorptionsmittel in Berührung gebracht wird, und am Ausgang der ersten Adsorptionssäule (1) ein an Verunreinigungen verarmter Kohlenwasserstoffabfluss abgezogen wird;
b) eine sekundäre Kohlenwasserstoff-Flüssigcharge, die entweder aus einer Fraktion der Kohlenwasserstoffcharge oder aus einer Fraktion des an Verunreinigungen verarmten Kohlenwasserstoffabflusses besteht, wird in einer Behandlungseinheit (3, 4, 22, 24) behandelt, umfassend eine dritte und vierte Adsorptionssäule (3, 4), die parallel und alternativ zur Adsorption und zur Regeneration arbeiten, wobei die Säulen jeweils ein drittes und viertes festen Adsorptionsmittel umfassen, und eine sekundäre Kohlenwasserstoff-Flüssigcharge, die von der Behandlungseinheit behandelt wurde, abgezogen wird;
c) die behandelte sekundäre Kohlenwasserstoff-Flüssigcharge aus Schritt c) wird erhitzt;
d) das zweite feste Adsorptionsmittel der zweiten Adsorptionssäule (2) wird mit der in Schritt c) erhitzten sekundären Kohlenwasserstoffcharge durch Inberührungbringen der Charge mit dem zweiten festen Adsorptionsmittel regeneriert, um die Verunreinigungen des zweiten festen Adsorptionsmittels zu desorbieren und einen mit Verunreinigungen beladenen Abfluss zu erzeugen,
wobei in der dritten Adsorptionssäule (3) die sekundäre Kohlenwasserstoff-Flüssigcharge mit dem dritten festen Adsorptionsmittel in Berührung gebracht wird, um eine behandelte sekundäre Kohlenwasserstoff-Flüssigcharge zu erzeugen, und wobei der mit Verunreinigungen beladene Abfluss aus der zweiten Adsorptionssäule (2) in die vierte Adsorptionssäule (4) geschickt wird, um das vierte feste Adsorptionsmittel zu regenerieren und einen mit Verunreinigungen beladenen Abfluss zu evakuieren.

2. Verfahren nach Anspruch 1, wobei der Arbeitsmodus der dritten und vierten Adsorptionssäule derart umgeschaltet wird, dass die vierte Adsorptionssäule (4) zur Adsorption arbeitet und die dritte Säule (3) zur Regeneration arbeitet.

3. Verfahren nach den Ansprüchen 1 oder 2, wobei in der Behandlungseinheit von Schritt b) durch Adsorption mindestens teilweise Organoschwefel-Verbindungen eliminiert werden, die in der sekundären Kohlenwasserstoff-Flüssigcharge vorhanden sind.

4. Verfahren nach einem der vorhergehenden Ansprüche, wobei der Arbeitsmodus der ersten und zweiten Adsorptionssäule (1, 2) derart umgeschaltet wird, dass die zweite Adsorptionssäule (2) zur Adsorption arbeitet und die erste Säule (1) zur Regeneration arbeitet.

5. Verfahren nach Anspruch 4, wobei der Arbeitsmodus zur Adsorption oder zur Regeneration der ersten und dritten Säule (1, 3) gleichzeitig umgeschaltet wird, und, zu derselben Zeit, gleichzeitig der Arbeitsmodus zur Adsorption oder zur Regeneration der zweiten und vierten Adsorptionssäule (2, 4) umgeschaltet wird.

6. Verfahren nach einem der vorhergehenden Ansprüche, wobei die Kohlenwasserstoffcharge aus einem Schnitt, umfassend Kohlenwasserstoffe mit 2 bis 8 Kohlenstoffatomen, und einem Schnitt, umfassend Kohlenwasserstoffe mit Siedepunkten zwischen 0 und 200 °C, ausgewählt wird.

7. Verfahren nach einem der vorhergehenden Ansprüche, wobei das feste Adsorptionsmittel mindestens ein Element umfasst, das ausgewählt wird aus aktivierten oder geförderten Aluminiumoxiden, Tonen, Molekularsieben, wie Zeolithen, Silikagelen, Aluminosilikaten, Aktivkohlen, Metalloxiden, entweder in Masse oder in Mischung mit einem/mehreren Bindemittel(n), oder abgeschieden auf einem Träger, Metallsulfiden, entweder in Masse oder in Mischung mit einem/mehreren Bindemittel(n), oder abgeschieden auf einem Träger, reduzierten Metallen, entweder in Masse oder in Mischung mit einem/mehreren Bindemittel(n), oder abgeschieden auf einem Träger, die gegebenenfalls dotiert und/oder sulfidiert sein können, Metallorganischen Gerüsten (MOF).

## Claims

1. A process for purifying a hydrocarbon feed comprising impurities, in which the following steps are carried out simultaneously:
a) treating the hydrocarbon feed in the liquid phase in a first adsorption unit comprising a first and a second adsorption column (1, 2) respectively filled with a first and second adsorbent solid, the first and second adsorption columns (1,2) operating in parallel and alternately in adsorption mode and in regeneration mode, said hydrocarbon feed being introduced into the first adsorption column (1) and brought into contact with the first adsorbent solid, and a hydrocarbon effluent which is depleted in impurities is taken off at the outlet from the first adsorption column (1);
b) treating a secondary liquid hydrocarbon feed which is constituted either by a fraction of the hydrocarbon feed or by a fraction of the hydrocarbon effluent which is depleted in impurities in a treatment unit (3, 4, 22, 24) comprising a third and fourth adsorption column (3, 4) operating in parallel and alternately in adsorption mode and in regeneration mode, said columns respectively comprising a third and fourth adsorbent solid, and a treated secondary liquid hydrocarbon feed is taken off from said treatment unit;
c) heating the treated secondary liquid hydrocarbon feed obtained from step b);
d) regenerating the second adsorbent solid of the second adsorption column (2) with the secondary hydrocarbon feed heated in step c) by bringing said feed into contact with the second adsorbent solid in order to desorb the impurities from the second adsorbent solid and produce an effluent which is charged with impurities,
in which the secondary liquid hydrocarbon feed is brought into contact in the third adsorption column (3) with the third adsorbent solid so as to produce the treated secondary liquid hydrocarbon feed and in which the effluent charged with impurities obtained from the second adsorption column (2) is sent to the fourth adsorption column (4) so as to regenerate the fourth adsorbent solid and evacuate an effluent charged with impurities.

2. The process as claimed in claim 1, in which the mode of operation of the third and fourth adsorption columns is switched so that the fourth adsorption column (4) operates in adsorption and the third column (3) operates in regeneration.

3. The process as claimed in claims 1 or 2, in which at least a portion of the organosulphur compounds present in the secondary liquid hydrocarbon feed is eliminated by adsorption in the treatment unit of step b).

4. The process as claimed in one of the preceding claims, in which the mode of operation of the first and second adsorption columns (1, 2) is switched such that the second adsorption column (2) operates in adsorption mode and the first column (1) operates in regeneration mode..

5. The process as claimed in claim 4, in which the mode of operation, adsorption or regeneration, of the first and third columns (1, 3) is switched simultaneously and, at the same time, the mode of operation, adsorption or regeneration, of the second and fourth adsorption columns (2, 4) is switched simultaneously.

6. The process as claimed in one of the preceding claims, in which the hydrocarbon feed is selected from a cut comprising hydrocarbons containing 2 to 8 carbon atoms and a cut comprising hydrocarbons having boiling points in the range 0°C to 200°C.

7. The process as claimed in one of the preceding claims, in which the adsorbent solid comprises at least one element selected from activated or promoted aluminas, clays, molecular sieves such as zeolites, silica gels, silica-aluminas, activated carbon, metallic oxides, either by themselves, or mixed with one or more binders, or deposited on a support, metallic sulphides, either by themselves, or mixed with one or more binders, or deposited on a support, reduced metals, either by themselves, or mixed with one or more binders, or deposited on a support which may optionally be doped and/or sulphurized, and Metal Organic Frameworks (MOF).
